# EUROPÄISCHE PATENTANMELDUNG

(11) **EP 2 285 069 A1**
(43) Veröffentlichungstag der Anmeldung: **16.02.2011**
(21) Anmeldenummer: 09167812.8
(22) Anmeldetag: 13.08.2009
(51) Int. Cl.: H04L 29/08, H04W 64/00

(54) **Verfahren, Vorrichtung und System zur gemeinschaftlichen Nutzung von Positionsdaten bei mobilen Endgeräten**

(71) Anmelder: Communology GmbH, 50670 Köln (DE)
(72) Erfinder: Kähler, Michael, 50674 Köln (DE)
(74) Vertreter: Cohausz & Florack

(57) **Zusammenfassung**

Für eine Steuerung eines mobiles Endgeräts (11-21, 431, 451) wird vorgeschlagen ein Verfahren zur Steuerung eines mobilen Endgeräts (11-21, 431, 451) durch Empfangen mindestens einer kennzeichnenden Identifikation mindestens eines weiteren mobilen Endgeräts (11-21, 431, 451) über einen Kurzstreckenfunk und durch Senden von Positionsdaten und die mindestens eine kennzeichnende Identifikation umfassenden Informationen an einen Server (40).

## Beschreibung

Der Gegenstand betrifft eine Vorrichtung, ein System und ein Verfahren zur Steuerung eines mobiles Endgeräts, welches über einen Kurzstreckenfunk mit mindestens einem weiteren mobilen Endgerät verbunden ist, und welches mit einem Server zum Senden und Empfangen von Informationen verbunden ist. Der Gegenstand betrifft ferner eine Vorrichtung, ein System und ein Verfahren zur Steuerung des Servers.

Im Mobilfunkmarkt werden mobile Endgeräte mit vielen unterschiedlichen Ausstattungen und Eigenschaften verwendet, wobei diese mobilen Endgeräte beispielsweise in die Klassen Low-End, Mid-End und High-End eingeteilt werden können. In der Regel verfügen nur die meist im High-End Bereich angesiedelten mobilen Endgeräte über genaue Mittel zur Lokalisation des Gerätes, wie z.B. durch einen eingebauten GPS-Empfänger.

Alle anderen mobilen Endgeräte können nur auf eine sehr ungenaue Zellortung durch den Netzbetreiber zurückgreifen.

Insbesondere bei großflächigen Zellen fällt eine Positionsbestimmung auf Basis der Zellortung äußerst ungenau aus.

Diese mobilen Endgeräte ohne genaue eigene Lokalisationsmöglichkeit sind allerdings sehr viel häufiger im Markt vertreten als die hochpreisigen mit einem GPS-Empfänger versehenen High-End Geräte.

Ausgehend von den aufgezeigten Nachteilen lag der Anmeldung die Aufgabe zugrunde, ein Verfahren, ein mobiles Endgerät, einen Server, als auch ein Computerprogramm zur Verfügung zu stellen, welches in einfacher und flexibler Weise eine Lokalisationsmöglichkeit von keine eigene Mittel zur Lokalisation umfassenden mobilen Endgeräten ermöglicht.

Die zuvor hergeleitete und aus dem Stand der Technik aufgezeigte Aufgabe wird gemäß einem Gegenstand gelöst durch ein Verfahren zur Steuerung eines mobilen Endgeräts. Hierbei wird vom mobilen Endgerät mindestens eine kennzeichnende Identifikation mindestens eines weiteren mobilen Endgeräts über einen Kurzstreckenfunk empfangen, und es werden von dem mobilen Endgerät Positionsdaten und die mindestens eine kennzeichnende Identifikation umfassenden Informationen an einen Server gesendet.

Ferner wird die Aufgabe durch ein mobiles Endgerät gelöst, wobei das mobile Endgerät ein erstes Kommunikationsmodul, welches dazu eingerichtet ist, über ein Kurzstreckenfunknetzwerk zu kommunizieren, umfasst, und einen Prozessor umfasst, welcher dazu eingerichtet ist, das zuvor beschriebene Verfahren durchzuführen.

Des weiteren wird die Aufgabe durch ein Computerprogramm zur Steuerung eines mobilen Endgeräts gelöst, welches das mobile Endgerät derart steuert, dass mindestens eine kennzeichnende Identifikation mindestens eines weiteren mobilen Endgeräts über einen Kurzstreckenfunk empfangen wird, und Positionsdaten und die mindestens eine kennzeichnende Identifikation umfassenden Informationen an einen Server gesendet werden.

Der Kurzstreckenfunk kann beispielsweise ein Kurzstreckenfunknetzwerk wie z.B. Bluetooth^{®}, Wireless LAN, Near Field Communications (NFC) oder ein ähnliches Kurzstreckenfunknetzwerk darstellen, und die mobilen Endgeräte sind dazu eingerichtet, über diesen Kurzstreckfunk Daten zu senden und/oder zu empfangen. Beispielsweise kann das Verfahren das Einschalten eines Kurzstreckenfunks im mobilen Endgerät umfassen, so dass anschließend ein selbst organisiertes Kurzstreckenfunknetzwerk zwischen dem mobilen Endgerät und dem mindestens einem weiteren mobilen Endgerät etabliert wird.

Das mobile Endgerät empfängt über den Kurzstreckenfunk kennzeichnende Identifikationen von zumindest einem weiteren mobilen Endgerät. Diese kennzeichnende Identifikation umfasst Informationen, die das jeweilige mobile Endgerät eindeutig identifizieren, so dass auf Grundlage der kennzeichnenden Identifikation das jeweilige mobile Endgerät identifiziert werden kann. Diese kennzeichnende Identifikation kann somit beispielsweise eine eineindeutige Kennung eines jeweiligen mobilen Endgeräts darstellen.

Die vom mobilen Endgerät empfangenen kennzeichnenden Identifikationen können somit beispielsweise als Liste der weiteren in einem über den Kurzstreckfunk ausgebildeten Kurzstreckenfunknetzwerk enthaltenen mobilen Endgeräte betrachtet werden.

Das mobile Endgerät ist ferner dazu eingerichtet, die gesammelten kennzeichnenden Identifikationen der weiteren mobilen Endgeräte zusammen mit Positionsdaten zu einem Server zu übertragen. Hierbei kann auch die kennzeichnende Identifikation des mobilen Endgeräts mit übertragen werden. Wenn dem Server diese Information vorliegt, z.B. aufgrund der Verbindung zwischen dem mobilen Endgerät und dem Server, so braucht die kennzeichnende Information des mobilen Endgeräts nicht zum Server übertragen zu werden.

Diese mobilen Endgeräte können dazu eingerichtet ein, über ein weiteres Funknetzwerk, das z.B. ein zellulares Netz wie z.B. GSM, UMTS, HSDPA, LTE oder ein anderes Mobilfunknetzwerk sein kann, zu kommunizieren. Das weitere Funknetzwerk weist eine höhere Rechweite als der Kurzstreckenfunk auf. Somit kann das mobile Endgerät dieses weitere Funknetzwerk zur Übertragung der gesammelten kennzeichnenden Identifikationen zusammen mit den Positionsdaten hin zum Server verwenden. Das mobile Endgerät kann beispielsweise ein weiteres Kommunikationsmodul zur Kommunikation über das weitere Funknetzwerk umfassen, jedoch kann auch das erste Kommunikationsmodul zur Kommunikation über das weitere Funknetzwerk eingerichtet sein.

Die Positionsdaten können jegliche Positionsdaten sein, welche die örtliche Position mindestens eines der mobilen Endgeräte des über den Kurzstreckenfunk ausgebildeten Kurzstreckenfunknetzwerkes beschreiben. Dies kann z.B. die Position des mobilen Endgeräts selbst sein, oder die Position mindestens eines des mindestens einen weiteren mobilen Endgeräts sein, oder eine Kombination hiervon.

Daher sei angenommen, dass zumindest eines der mobilen Endgeräte eine Einrichtung zur Positionsbestimmung umfasst. Diese Einrichtung zur Positionsbestimmung kann beispielsweise eine satellitenbasierte Positionsbestimmungseinheit, wie beispielsweise ein GPS-Empfänger zur Ermittlung von GPS-basierten Positionsdaten sein, ein Galileo-Empfänger zur Ermittlung von Galileo-basierten Positionsdaten, ein GLONASS-Empfänger zur Ermittlung von GLONASS-basierten Positionsdaten sein, sie kann aber auch einen anderen Empfänger zur Ermittlung von Positionsdaten darstellen. Diese Positionsdaten können beispielsweise Orts-Koordinaten darstellen, z.B. in kartesischer Darstellung oder in Polarkoordinatenform, oder auch Positionsdaten in einer anderen geeigneten Form, wie z.B. Breiten- und Längengerade. Die Positionsdaten können auch eine Höheninformation umfassen.

Durch das Senden der kennzeichnenden Informationen und den Positionsdaten kann der Server beispielsweise jedem der mobilen Endgeräte eine Positionsinformation zuweisen.

Gemäß einem vorteilhaften Ausführungsbeispiel wird ein Verfahren zur Steuerung des Servers vorgeschlagen, welches das Empfangen von Informationen von einem mobilen Endgerät umfasst, wobei diese Information mindestens eine kennzeichnende Identifikation von mindestens einem weiteren mobilen Endgerät und Positionsdaten umfassen, wobei das mobile Endgerät und das mindestens eine weitere mobile Endgerät über einen Kurzstreckenfunk verbunden sind, welches das Ermitteln von mindestens einer Gruppe an benachbarten mobilen Endgeräten auf Grundlage der empfangenen Informationen umfasst, und welches das Ermitteln und Zuweisen einer Positionsinformation zu jeder der mindestens einen ermittelten Gruppe umfasst.

Gemäß einem vorteilhaften Ausführungsbeispiel wird ein Server mit einem Prozessor vorgeschlagen, wobei der Prozessor dazu eingerichtet ist, das zuvor beschriebene Verfahren zur Steuerung eines Servers durchzuführen.

Gemäß einem vorteilhaften Ausführungsbeispiel wird ein Computerprogramm zur Steuerung eines Servers vorgeschlagen, wobei das Computerprogramm das zuvor beschriebene Verfahren zur Steuerung eines Servers durchführt.

Gemäß einem vorteilhaften Ausführungsbeispiel wird ein System mit mindestens einem der zuvor und/oder nachfolgend erläuterten mobilen Endgeräten und dem Server vorgeschlagen.

Liegen beispielsweise nur Positionsdaten für ein einziges mobiles Endgerät eines über den Kurzstreckenfunk ausgebildeten Kurzstreckenfunknetzwerkes vor, so kann der Server beispielsweise eine Gruppe derart ermitteln, dass sämtliche mobilen Endgeräte des Kurzstreckenfunknetzwerkes in dieser Gruppe enthalten sind, wobei die ermittelte und dieser Gruppe zugewiesene Positionsinformation den Positionsdaten des einen mobilen Endgeräts entsprechen kann. Da alle mobilen Endgeräte über das Kurzstreckenfunknetzwerk verbunden sind, sind die mobilen Endgeräte räumlich nahe angeordnet, so dass die der Gruppe zugewiesene Positionsinformation genauer ist als z.B. die Ortsinformation einer Mobilfunkzelle, in welcher sich die Gruppe befindet.

Sei beispielsweise angenommen, dass mehrere der mobilen Endgeräte über ein durch den Kurzstreckenfunk ausgebildetes Kurzstreckennetzwerk Positionsdaten zur Verfügung stellen können, so kann der Server beispielsweise auf Grundlage dieser Positionsdaten ermitteln, welche der mobilen Endgeräte sich in Gruppen räumlich nahe beieinander befinden, und diese sich räumlich nahe befindlichen mobilen Endgeräte in verschiedene Gruppen einteilen, und diesen Gruppen unterschiedliche Positionsinformationen auf Grundlage der mehreren empfangenen Positionsdaten zuordnen. Somit kann eine noch höhere Ortsgenauigkeit bezüglich der den Gruppen zugewiesenen Positionsinformationen erzielt werden.

Der Server kann des Weiteren dazu eingerichtet sein, von einer Vielzahl von durch Kurzstreckfunk ausgebildeten Kurzstreckenfunknetzwerken Informationen zu empfangen, die jeweils kennzeichnende Identifikationen von den mobilen Endgeräten in den jeweiligen Kurzstreckenfunknetzwerken und Positionsdaten umfassen. Somit kann der Server diese verschiedenen Kurzstreckenfunknetzwerke jeweils in mindestens eine Gruppe räumlich benachbarter mobiler Endgeräte einteilen und jeder Gruppe eine Positionsinformation zuweisen.

Gemäß einem vorteilhaften Ausführungsbeispiel wird vorgeschlagen, dass die Positionsdaten die Positionsdaten von einem des mindestens einen weiteren mobilen Endgeräts umfassen, welche über den Kurzstreckenfunk empfangen werden.

Somit können auch Positionsdaten von mindestens einem weiteren mobilen Endgerät zur Ermittlung der Positionsinformation einer Gruppe mit berücksichtigt werden. Gemäß einem vorteilhaften Ausführungsbeispiel wird vorgeschlagen, dass das mobile Endgerät eigene Positionsdaten abfragt, und die gesendeten Positionsdaten diese eigenen Positionsdaten umfassen.

Somit können auch Positionsdaten des mobilen Endgeräts, welches die Information an den Server sendet, zur Ermittlung der Positionsinformation einer Gruppe mit berücksichtigt werden. Dementsprechend umfasst das mobile Endgerät Mittel zur Positionsbestimmung.

Gemäß einem vorteilhaften Ausführungsbeispiel wird vorgeschlagen, dass das mobile Endgerät über den Kurzstreckenfunk zusätzliche positionsbezogene Informationen über mindestens eines der weiteren mobilen Endgeräte in Bezug auf das vom Kurzstreckfunk ausgebildete Kurzstreckenfunknetzwerk empfängt, und dass die gesendeten Informationen diese zusätzlichen positionsbezogenen Informationen umfassen.

Diese zusätzlichen positionsbezogenen Informationen können beispielsweise Informationen aus der gegenseitigen Ortung der mobilen Endgeräte über den Kurzstreckenfunk darstellen. Diese zusätzlichen positionsbezogenen Informationen werden beispielsweise durch die gegenseitige Kommunikation der mobilen Endgeräte in dem durch den Kurzstreckenfunk ausgebildeten Kurzstreckenfunknetzwerk gesammelt und zu dem mobilen Endgerät, welches mit dem Server verbindbar ist, übertragen. Die von diesem mobilen Endgerät zum Server gesendeten Informationen können ferner auch zusätzliche positionsbezogene Information über dieses mobile Endgerät in Bezug auf das ausgebildete Kurzstreckenfunknetzwerk umfassen. Beispielsweise können diese positionsbezogenen Information dazu geeignet sein, die Struktur bzw. die Topologie des Kurzstrecknetzwerkes serverseitig abzubilden, so dass diese Informationen zur Ermittlung der mindestens einen Gruppe verwendet werden können und/oder auch zur Ermittlung der Positionsinformation für mindestens eine Gruppe verwendet werden können.

Gemäß einem vorteilhaften Ausführungsbeispiel wird vorgeschlagen, dass die zusätzlichen positionsbezogenen Informationen mindestens eine der folgenden Informationen umfassen: Information, ob das jeweilige mobile Endgerät ein Master oder Slave-Gerät ist; Information, mit welchen weiteren mobilen Endgeräten das jeweilige mobile Endgerät direkt über das Kurzstreckenfunknetzwerk verbunden ist; und Information über ein Maß der Empfangsfeldsstärke der Kurzstreckenfunkverbindung, mit der das jeweilige mobile Endgerät mit einem weiteren mobilen Endgerät über das Kurzstreckenfunknetzwerk verbunden ist.

Die Information, ob ein mobiles Endgerät ein Master oder ein Slave-Gerät ist, kann beispielsweise vom Server dazu verwendet werden, um Unternetzwerke eines durch den Kurzstreckenfunk ausgebildeten Kurzstreckennetzwerkes zu ermitteln, die beispielsweise für die Gruppierung der mobilen Endgeräte verwendet werden können. Beispielsweise kann ein Unternetzwerk aus einem Master-Gerät und den direkt verbundenen Slave-Geräten gebildet werden.

Die Information, mit welchen weiteren mobilen Endgeräten ein jeweiliges mobiles Endgerät verbunden ist, kann beispielsweise serverseitig zur Nachbildung der Struktur des durch den Kurzstreckenfunk ausgebildeten Kurzstreckennetzwerkes verwendet werden.

Die Information über ein Maß der Empfangsfeldsstärke einer Kurzstreckenfunkverbindung, mit der das jeweilige mobile Endgerät mit einem weiteren mobilen Endgerät über den Kurzstreckenfunk verbunden ist, kann beispielsweise als Indikator für eine Entfernung zwischen dem jeweiligen und dem weiteren mobilen Endgerät verwendet werden. Ist das Maß der Empfangsfeldstärke relativ schwach, so kann z.B. die Gruppierung der mobilen Endgeräte so erfolgen, dass das eine mobile Endgerät einer ersten Gruppe zugewiesen wird und das andere mobile Endgerät einer zweiten Gruppe zugewiesen wird, so dass eine Trennung der beiden mobilen Endgeräte hinsichtlich der eingeteilten Gruppen vorgenommen wird. Liegt ein hohes Maß an Empfangsfeldstärke zwischen dem jeweiligen und dem weiteren mobilen Endgerät vor, so können diese beiden mobilen Endgeräte beispielsweise derselben Gruppe zugewiesen werden.

Gemäß einem vorteilhaften Ausführungsbeispiel wird vorgeschlagen, dass ein vom Kurzstreckenfunk ausgebildete Kurzstreckenfunknetzwerk mindestens ein Unternetzwerk umfasst und die zusätzlichen positionsbezogenen Informationen eine Information, zu welchem Unternetzwerk des Kurzstreckenfunknetzwerkes das jeweilige mobile Endgerät zugeordnet ist, umfassen.

Beispielsweise kann das Kurzstreckenfunknetzwerk ein sich selbst organisierendes Ad-hoc-Netzwerk darstellen, welches aus mehreren Piconetzwerken besteht, die untereinander verbunden sind. Diese Piconetzwerke stellen somit Unternetzwerke dar. Die mobilen Endgeräte im selbst organisierten Ad-hoc-Netzwerk können dazu eingerichtet sein, Informationen über die Zugehörigkeit der einzelnen mobilen Endgeräte hinsichtlich der Piconetzwerke zu sammeln. Diese Informationen können als zusätzliche positionsbezogene Informationen zum Server gesendet werden und dort für die Gruppierung und/oder Ermittlung der Positionsinformationen für mindestens eine Gruppe verwendet werden.

Gemäß einem vorteilhaften Ausführungsbeispiel wird vorgeschlagen, dass das serverseitige Ermitteln der mindestens einen Gruppe ein Vorgruppieren der mobilen Endgeräte nach Unternetzwerken umfasst.

Die Informationen über die Zugehörigkeit der einzelnen mobilen Endgeräte hinsichtlich der Unternetzwerke kann beispielsweise für eine Vorgruppierung der mobilen Endgeräte verwendet werden, da angenommen werden kann, dass die mobilen Endgeräte in einem Unternetzwerk räumlich nahe zugeordnet sind. Auf Grundlage weiterer Informationen kann der Server jedoch diese Vorgruppierung nochmals verändern. Beispielsweise kann dies der Fall sein, wenn ein mobiles Endgerät eines Unternetzwerk eine Verbindung mit höherer Feldstärke zu einem mobilen Endgerät eines weiteren Unternetzwerkes aufweist, während die Verbindung des mobilen Endgeräts zum ursprünglichen Unternetzwerk eine geringere Feldstärke aufweist.

Gemäß einem vorteilhaften Ausführungsbeispiel wird vorgeschlagen, dass das serverseitige Ermitteln der mindestens einen Gruppe das Bestimmen von Aufenthaltsorten der mobilen Endgeräte zueinander in einem durch den Kurzstreckenfunk ausgebildeten Kurzstreckenfunknetzwerk umfasst.

Diese Aufenthaltsorte können beispielsweise durch die zusätzlichen positionsbezogenen Informationen und/oder auf Grundlage der empfangenen Positionsdaten ermittelt werden. In Abhängigkeit der bestimmten Aufenthaltsorte kann anschließend die Gruppierung der mobilen Endgeräte in Gruppen von räumlich benachbarten mobilen Endgeräten erfolgen.

Beispielsweise kann für das Bestimmen der Aufenthaltsorte auch Information aus dem weiteren Funknetzwerk verwendet werden. Handelt es sich bei dem weiteren Funknetzwerk beispielsweise um ein zellulares Netzwerk, und befinden sich mobile Endgeräte des Kurzstreckenfunknetzwerks in verschiedenen Zellen des weiteren Funknetzwerks, so kann diese Zuordnung der mobilen Endgeräte zu verschiedenen Zellen des weiteren Funknetzwerk beispielsweise für eine Vorgruppierung der mobilen Endgeräte verwendet werden.

Gemäß einem vorteilhaften Ausführungsbeispiel wird vorgeschlagen, dass das Ermitteln einer Positionsinformation zu einer ermittelten Gruppe auf Grundlage von Positionsdaten mindestens eines mobilen Endgeräts dieser Gruppe erfolgt.

Liegen beispielsweise Positionsdaten für genau eines der mobilen Endgeräte in einer Gruppe vor, so können diese Positionsdaten als Positionsinformation für diese Gruppe verwendet werden. Liegen beispielsweise Positionsdaten für mehrere mobile Endgeräte einer Gruppe vor, so kann beispielsweise ein Mittelwert der vorliegenden Positionsdaten zur Ermittlung der gruppenbezogenen Positionsinformation verwendet werden.

Gemäß einem vorteilhaften Ausführungsbeispiel wird vorgeschlagen, dass das Ermitteln einer Positionsinformation zu einer ermittelten Gruppe auf Grundlage von Positionsdaten von mobilen Endgeräten mindestens einer benachbarten Gruppe erfolgt.

Die benachbarten Gruppen können beispielsweise über die zuvor erläuterten zusätzlichen positionsbezogenen Informationen festgestellt werden.

Liegen beispielsweise für die ermittelte Gruppe keine Positionsdaten vor, so kann die Positionsinformation dieser Gruppe beispielsweise auf Grundlage von Positionsdaten von mobilen Endgeräten mindestens einer benachbarten Gruppe geschätzt werden. Aber auch wenn für die ermittelte Gruppe Positionsdaten vorliegen, so können die Positionsdaten von mobilen Endgeräten von benachbarten Gruppen zur Unterstützung bei der Bestimmung der Positionsinformation mit verwendet werden. Dies kann beispielsweise dann erfolgen, wenn nur Positionsdaten von einem mobilen Endgerät innerhalb der ermittelten Gruppe vorliegen, und dieses mobile Endgerät von der Netzwerkstruktur des durch den Kurzstreckfunk ausgebildeten Kurzstreckenfunknetzwerk nicht in der Mitte der Gruppe liegt, was beispielsweise durch eine geringe Feldstärke zu einem als Server wirkenden mobilen Endgerät in dieser Gruppe angezeigt werden könnte.

Gemäß einem vorteilhaften Ausführungsbeispiel wird vorgeschlagen, dass die Positionsdaten von mindestens zwei mobilen Endgeräten aus mindestens zwei benachbarten Gruppen zur Ermittlung der Positionsinformation verwendet werden.

Somit kann die Positionsinformation für die ermittelte Gruppe beispielsweise aus einer Mittelung aus den verschiedenen Positionsdaten der mindestens zwei mobilen Endgeräte der mindestens zwei benachbarten Gruppen bestimmt werden.

Liegen beispielsweise Positionsdaten von mobilen Endgeräten aus mindestens drei benachbarten Gruppen vor, so kann die Positionsinformation aus einer Kreuzpeilung basierend auf diesen Positionsdaten erfolgen. Ferner können auch die Positionsinformationen der benachbarten Gruppen, die ja auf den jeweiligen Positionsdaten basieren können, zur Schätzung der Positionsinformation der ermittelten Gruppen verwendet werden.

Gemäß einem vorteilhaften Ausführungsbeispiel wird vorgeschlagen, dass der Server eine Gruppe der mindestens einen Gruppe auswählt und an diese ausgewählte Gruppe gruppenspezifische Daten sendet.

Nachdem der Server die mindestens eine Gruppe für das Kurzstreckenfunknetzwerk gebildet hat und jeder dieser mindestens einen Gruppe eine Positionsinformation zugewiesen hat, kann der Server beispielsweise gezielte Gruppen auswählen und diesen Gruppen vorbestimmbare Verhaltensinstruktionen als gruppenbezogene Daten zuweisen.

Hierzu kann der Server beispielsweise diese Verhaltensinstruktionen in Form von gruppenbezogenen Daten an ein mobiles Endgerät der jeweiligen Gruppe senden, so dass dieses mobile Endgerät diese Verhaltensinstruktionen an die weiteren mobilen Endgerät dieser Gruppe weitersendet, der Server kann aber beispielsweise auch jedes mobile Endgerät einer Gruppe einzeln kontaktieren.

Nachdem die gruppenspezifischen Daten von den jeweiligen mobilen Endgeräten empfangen worden sind, können diese mobilen Endgeräte beispielsweise die in den gruppenspezifischen Daten enthaltenen Verhaltensinstruktionen ausführen.

Gemäß einem vorteilhaften Ausführungsbeispiel wird vorgeschlagen, dass der Server die Informationen von dem mobilen Endgerät über ein weiteres Funknetzwerk empfängt.

Diese weitere Funknetzwerk kann z.B. ein zellulares Netz wie z.B. GSM, UMTS, HSDPA, LTE oder ein anderes Mobilfunknetz sein. Das weitere Funknetzwerk weist eine höhere Reichweite als der Kurzstreckenfunk auf.

Gemäß einem vorteilhaften Ausführungsbeispiel wird vorgeschlagen, dass das Ermitteln der mindestens einen Gruppe an benachbarten mobilen Endgeräten auf Grundlage von Positionsinformationen des weiteren Funknetzwerkes erfolgt.

Handelt es sich bei dem weiteren Funknetzwerk beispielsweise um ein zellulares Netzwerk, und befinden sich mobile Endgeräte des Kurzstreckenfunknetzwerks in verschiedenen Zellen des weiteren Funknetzwerks, so kann diese Zuordnung der mobilen Endgeräte zu verschiedenen Zellen des weiteren Funknetzwerks beispielsweise für eine Gruppierung der mobilen Endgeräte verwendet werden.

Gemäß einem vorteilhaften Ausführungsbeispiel wird vorgeschlagen, dass das Ermitteln der Positionsinformation auf Grundlage von Positionsinformationen des weiteren Funknetzwerkes erfolgt.

Beispielsweise kann die Positionsinformation einer Zelle eines Mobilfunknetzes für die Ermittlung der Positionsinformation für eine Gruppe mit verwendet werden.

Gemäß einem vorteilhaften Ausführungsbeispiel wird vorgeschlagen, dass der Server die gruppenspezifischen Daten an ein mobiles Endgerät der ausgewählten Gruppe sendet und dieses mobile Endgerät anweist, die gruppenspezifischen Daten an die weiteren mobilen Endgeräte dieser ausgewählten Gruppe über das Kurzstreckenfunknetzwerk zu senden.

Gemäß einem vorteilhaften Ausführungsbeispiel wird ferner ein Computerprogramm zur Steuerung eines Servers vorgeschlagen, so dass der Server eine Gruppe der mindestens einen Gruppe auswählt und an diese ausgewählte Gruppe gruppenspezifische Daten sendet.

Gemäß einem vorteilhaften Ausführungsbeispiel wird ferner ein Verfahren zur Steuerung eines mobiles Endgeräts vorgeschlagen, durch Empfangen von gruppenspezifischen Daten und von Anweisungsdaten von einem Server, wobei die Anweisungsdaten eine Liste mit mindestens einem weiteren mobilen Endgerät umfasst, und durch Senden der gruppenspezifischen Daten an das mindestens eine weitere mobiles Endgerät über ein Kurzstreckenfunknetzwerk.

Gemäß einem vorteilhaften Ausführungsbeispiel wird ferner ein Programm zur Steuerung eines mobilen Endgeräts vorgeschlagen, durch Empfangen von gruppenspezifischen Daten und von Anweisungsdaten von einem Server, wobei die Anweisungsdaten eine Liste mit mindestens einem weiteren mobilen Endgerät umfasst, und durch Senden der gruppenspezifischen Daten an das mindestens eine weitere mobiles Endgerät über ein Kurzstreckenfunknetzwerk.

Auf dem mobilen Endgerät kann beispielsweise ein Client installiert sein, der dazu eingerichtet ist, von dem Server gruppenspezifische Daten und die vorstehend genannten Anweisungsdaten zu empfangen. Auf Grundlage der empfangenen gruppenspezifischen Daten kann das mobile Endgerät die gruppenspezifischen Daten an die in den Anweisungsdaten benannten weiteren mobilen Endgeräte über das Kurzstreckenfunknetzwerk versenden.

Somit kann der Server beispielsweise pro ausgewählter Gruppe nur einen Funkkontakt über das weitere Funknetzwerk zu einem ausgewählten mobilen Endgerät aufbauen, während die gruppenspezifischen Daten nachfolgend von diesem mobilen Endgerät über das Kurzstreckenfunknetzwerk an die weiteren mobilen Endgeräte dieser Gruppe verteilt werden können.

Der Server kann allerdings auch die gruppenspezifischen Daten an mehrere oder alle mobilen Endgeräte einer ausgewählten Gruppe direkt senden, beispielsweise über das zuvor erläuterte weitere Funknetzwerk.

So können beispielsweise bei Verkehrsstaus gezielt Anweisungen an mobile Endgeräte von ausgewählten Gruppen gesendet werden, um beispielsweise Rettungsgassen zu bilden oder ideale Geschwindigkeiten einzuhalten, die energieeffizient sind oder zu einer schnelleren Auflösung eines Staus führen. Bei Großveranstaltungen können beispielsweise Publikumsströme besser geleitet werden. In Stadien und bei Konzerten können beispielsweise durch gezielt getimte Aufsteh- und Armbewegungen vielfältige Wellen erzeugt oder durch koordinierte Displayanimationen Lichteffekte erzeugt werden.

Des Weiteren wird ein System vorgestellt, dass mindestens eines der vorstehend beschriebenn mobilen Endgeräte und einen der vorstehend beschriebenen Server umfasst.

Nachfolgend wird die Anmeldung anhand von Ausführungsbeispiele zeigenden Figuren näher erläutert.

In den Figuren zeigen:
- Fig. 1: Ein Kurzstreckenfunknetzwerk mit mehreren mobilen Endgeräten gemäß einer ersten beispielhaften Ausführungsform der vorliegenden Erfindung;
- Fig. 2a: Ein exemplarisches Flußdiagramm eines Verfahrens gemäß einer weiteren beispielhaften Ausführungsform der vorliegenden Erfindung;
- Fig. 2b: Ein exemplarisches Flußdiagramm eines Verfahrens gemäß einer weiteren beispielhaften Ausführungsform der vorliegenden Erfindung;
- Fig. 3: Eine exemplarische Gruppierung eines Kurzstreckenfunknetzwerks mit mehreren mobilen Endgeräten gemäß einer weiteren beispielhaften Ausführungsform der vorliegenden Erfindung;
- Fig. 4a: Eine exemplarische Gruppierung eines Kurzstreckenfunknetzwerks mit mehreren mobilen Endgeräten gemäß einer weiteren beispielhaften Ausführungsform der vorliegenden Erfindung;
- Fig. 4b: Eine exemplarische Ermittlung einer Positionsinformation gemäß einer weiteren beispielhaften Ausführungsform der vorliegenden Erfindung;
- Fig. 5a: Ein exemplarisches Flußdiagramm eines Verfahrens gemäß einer weiteren beispielhaften Ausführungsform der vorliegenden Erfindung; und
- Fig. 5b: Ein exemplarisches Flußdiagramm eines Verfahrens gemäß einer weiteren beispielhaften Ausführungsform der vorliegenden Erfindung.

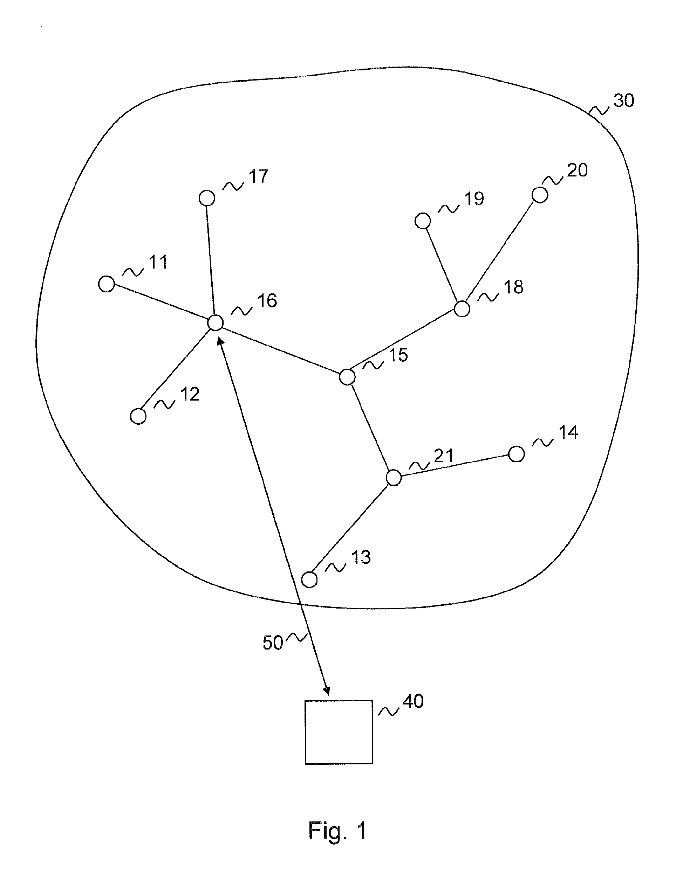

Figur 1 zeigt ein Kurzstreckenfunknetzwerk zwischen verschiedenen mobilen Endgeräten 11-21 gemäß einer ersten beispielhaften Ausführungsform der vorliegenden Erfindung.

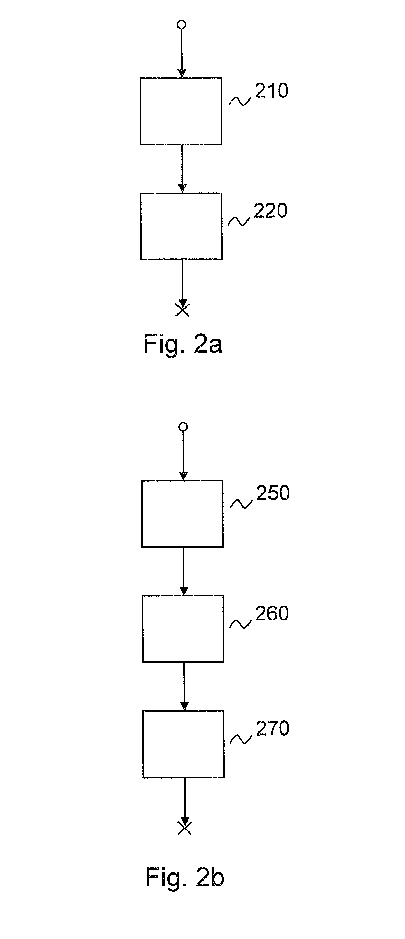

Diese erste beispielhafte Ausführungsform wird im Folgenden zusammen mit dem in Fig. 2a dargestellten Verfahren gemäß einer weiteren beispielhaften Ausführungsform zur Steuerung eines mobilen Endgerätes und mit dem in Fig. 2b dargestellten Verfahren gemäß eine weiteren beispielhaften Ausführungsform zur Steuerung eines Servers beschrieben.

Diese mobilen Endgeräte 11-21 sind dazu eingerichtet, über einen Kurzstreckenfunk, wie z.B. Bluetooth^{®}, Wireless LAN oder dergleichen, Funkkontakt zu einem weiteren mobilen Endgerät 11-21 aufzunehmen und über diesen Kurzstreckenfunk Daten zu versenden und/oder zu empfangen. Dieser Kurzsteckenfunk kann somit ein Kurzstreckenfunknetzwerk 30 ausbilden.

Des Weiteren sind diese mobilen Endgeräte 11-21 dazu eingerichtet, über ein weiteres Funknetzwerk 50, wie z.B. GSM, UMTS, HSDPA, LTE oder ein anderes Mobilfunknetzwerk, zu kommunizieren.

Beispielsweise aktiviert ein in dem mobilen Endgerät 16 installiertes Programm, wie z.B. ein Client, den Kurzstreckenfunk und scannt nach weiteren über den Kurzstreckenfunk verfügbaren mobilen Endgeräten 11-15 und 17-21. Hierdurch wird z.B. ein Ad-hoc-Netzwerk 30 ausgebildet, wie es beispielhaft in Fig. 1 dargestellt ist. Dieses Ad-hoc-Netzwerk 30 stellt ein unter den mobilen Endgeräten 11-21 selbstorganisiertes Kurzstreckenfunknetzwerk 30 dar.

Das mobile Endgerät 16 scannt über diesen Kurzstreckenfunk die weiteren mobilen Endgeräte 11-15 und 17-21 ab und empfängt über den Kurzstreckenfunk kennzeichnende Identifikationen von den weiteren mobilen Endgeräten 11-15 und 17-21. Der Vorgang des Empfangens der mindestens einen kennzeichnenden Identifikation von mindestens einem weiteren mobilen Endgerät durch das mobile Endgerät 16 ist in Fig. 2a durch Block 210 dargestellt. Diese kennzeichnende Identifikation umfasst Informationen, die das jeweilige mobile Endgerät eindeutig identifizieren, so dass auf Grundlage der kennzeichnenden Identifikation das zugehörige mobile Endgerät identifiziert werden kann. Diese kennzeichnende Identifikation kann somit beispielsweise eine eineindeutige Kennung eines jeweiligen mobilen Endgeräts darstellen.

Die vom mobilen Endgerät 16 empfangenen kennzeichnenden Identifikationen können somit beispielsweise als Liste der weiteren in dem durch den Kurzstreckenfunk ausgebildeten Kurzstreckenfunknetzwerk 30 enthaltenen mobilen Endgeräte 11-15 und 17-21 betrachtet werden.

Des Weiteren sei für das in Fig. 1 beispielhaft dargestellte Kurzstreckenfunknetzwerk 30 angenommen, dass zumindest eines der mobilen Endgeräte 11-21 eine Einrichtung zur Positionsbestimmung umfasst. Diese Einrichtung zur Positionsbestimmung kann beispielsweise ein GPS-Empfänger zur Ermittlung von GPS-basierten Positionsdaten sein, ein Galileo-Empfänger zur Ermittlung von Galileo-basierten Positionsdaten, ein GLONASS-Empfänger zur Ermittlung von GLONASS-basierten Positionsdaten oder ein anderer Empfänger zur Ermittlung von Positionsdaten sein. Diese Positionsdaten können beispielsweise Orts-Koordinaten darstellen, z.B. in kartesischer Darstellung oder in Polarkoordinatenform, oder auch Positionsdaten in einer anderen geeigneten Form, wie z.B. Breiten- und Längengerade. Die Positionsdaten können auch eine Höheninformation umfassen.

Das mobile Endgerät 16 ist ferner dazu eingerichtet, die gesammelten kennzeichnenden Identifikationen der weiteren mobilen Endgeräte 11-15 und 17-20 zusammen mit den Positionsdaten des zumindest einen mobilen Endgeräts 11-20 zu einem Server 40 zu übertragen. Dieses Senden von die mindestens eine kennzeichnende Identifikation und Positionsdaten umfassenden Informationen vom mobilen Endgerät 16 zum Server 40 ist in Fig. 2a durch Block 220 dargestellt, und in Fig. 2b wird das serverseitige Empfangen von diesen Informationen, welche mindestens eine kennzeichnende Identifikation von mindestens einem weiteren mobilen Endgerät und Positionsdaten umfassen, durch Block 250 dargestellt. Diese Übertragung kann über das zuvor beschriebene weitere Funknetzwerk 50 erfolgen. Das mobile Endgerät 16 kann darüber hinaus seine eigene kennzeichnende Identifikation zum Server 40 senden.

Auf Grundlage der empfangenen kennzeichnenden Identifikationen und der Positionsdaten kann der Server 40 die mobilen Endgeräte 11-21 in mindestens eine Gruppe einteilen, wie im beispielhaften Verfahren in Fig. 2b durch Block 260 dargestellt, und diesen Gruppen jeweils Positionsinformationen zuweisen, wie im beispielhaften Verfahren in Fig. 2b durch Block 270 dargestellt.

Sei beispielsweise angenommen, dass nur eines der mobilen Endgeräte 11-21 des Kurzstreckennetzwerkes 30 Positionsdaten zur Verfügung stellen kann, z.B. das mobile Endgerät 21, so kann der Server 40 beispielsweise die mobilen Endgeräte 11-21 als eine einzige Gruppe zusammenfassen und dieser Gruppe die Positionsdaten des einen mobilen Endgeräts 21 als Positionsinformation zuweisen. Da sich das Kurzstreckennetzwerk nicht über weite Entfernungen ausdehnt, ist somit dennoch eine bessere Positionszuweisung möglich, als wenn dieser Gruppe beispielsweise nur die Ortsinformation der jeweiligen Mobilfunkzelle zugeordnet würde.

Sei beispielsweise angenommen, dass mehrere der mobilen Endgeräte 11-21 des Kurzstreckennetzwerkes 30 Positionsdaten zur Verfügung stellen kann, z.B. die mobilen Endgeräte 16 und 21, so kann der Server 40 beispielsweise ermitteln, welche der mobilen Endgeräte 11-21 sich in Gruppen räumlich nahe beieinander befinden und diesen Gruppen bestimmte Positionsinformationen auf Grundlage der mehreren empfangenen Positionsdaten zuordnen.

Somit ermöglicht es die vorliegende Erfindung, dass von einem mobilen Endgerät bereitgestellte Positionsdaten zur Positionsbestimmung von weiteren mobilen Endgeräten 11-21 verwendet werden.

Des Weiteren kann das mobile Endgerät 16 neben den kennzeichnenden Informationen zusätzliche positionsbezogene Information über mobile Endgeräte in Bezug auf das Kurzstreckenfunknetzwerk 30 von den weiteren mobilen Endgeräten 11-15 und 17-21 empfangen und zum Server 40 senden. Diese zusätzlichen positionsbezogenen können beispielsweise vom Server 40 zur Einteilung der Gruppen und/oder zur Ermittlung der gruppenbezogenen Positionsinformationen verwendet werden. Ferner kann das mobile Endgerät auch eigene zusätzliche positionsbezogene Information in Bezug auf das Kurzstreckenfunknetzwerk 30 ermitteln und diese auch zum Server 40 senden. Beispielsweise kann diese zusätzliche Information eines der mobilen Endgeräte einen Datensatz über die zum diesem mobilen Endgerät direkt über das Kurzstreckenfunknetzwerk 30 verbundenen und somit benachbarten mobilen Endgeräte umfassen. Bezogen auf die Figur 1 und auf das mobile Endgerät 15 könnte dieser Datensatz also anzeigen, dass das mobile Endgerät 15 direkt mit den mobilen Endgeräte 16, 21 und 18 über das Kurzstreckenfunknetzwerk 30 verbunden ist. Diese zusätzlichen positionsbezogene Informationen können beispielsweise auch noch weitere Informationen über kurzstreckenfunkbezogene Daten des jeweiligen mobilen Endgeräts umfassen, wie z.B. die Information, ob das mobile Endgerät ein Server oder ein Master darstellt, oder auch die Information über ein Maß der Empfangsstärke des Funksignals zwischen dem jeweiligen mobilen Endgerät und den direkt über das Kurzstreckenfunknetzwerk mit diesem mobilen Endgerät direkt verbundenen mobilen Endgerät.

Beispielsweise kann der Server 40 die mobilen Endgeräte 11-21 derart gruppieren, dass in jeder Gruppe mindestens eines der mobilen Endgeräte eigene Positionsdaten zur Verfügung stellt, wobei der Server 40 einer Gruppe eine auf Grundlage der in dieser Gruppe zur Verfügung gestellten Positionsdaten ermittelte Positionsinformation zuweist. Werden innerhalb einer Gruppe nur von einem mobilen Endgerät Positionsdaten zur Verfügung gestellt, so kann der Server 40 diese Positionsdaten als Positionsinformation für diese Gruppe verwenden. Bei mehreren zur Verfügung gestellten Positionsdaten pro Gruppe kann der Server 40 beispielsweise einen Mittelwert aus den verschiedenen Positionsdaten bilden und der Gruppe diesen Mittelwert als Positionsinformation zuweisen.

Nachdem der Server 40 die mindestens eine Gruppe für das Kurzstreckenfunknetzwerk 30 gebildet hat und jeder dieser mindestens einen Gruppe eine Positionsinformation zugewiesen hat, kann der Server 40 beispielsweise gezielte Gruppen auswählen und diesen Gruppen vorbestimmbare Verhaltensinstruktionen als gruppenbezogene Daten zuweisen.

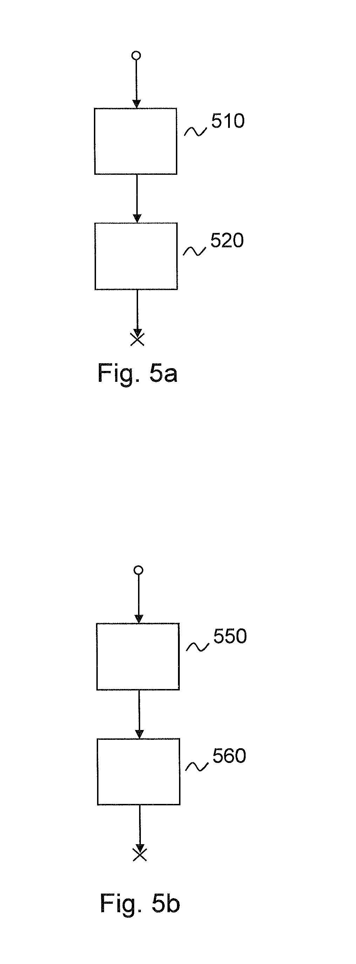

Hierzu kann der Server 40 beispielsweise diese Verhaltensinstruktionen in Form von gruppenbezogenen Daten an ein mobiles Endgerät der jeweiligen Gruppe senden, so dass dieses mobile Endgerät diese Verhaltensinstruktionen an die weiteren mobilen Endgerät dieser Gruppe weitersendet, der Server 40 kann aber beispielsweise auch jedes mobile Endgerät einer Gruppe einzeln kontaktieren. Auf dieses Versenden von gruppenbezogenen Daten wird später in Hinblick auf die in den Fig. 5a und 5b dargestellten beispielhaften Ausführungsformen detaillierter eingegangen.

Der Server 40 kann des Weiteren dazu eingerichtet sein, von einer Vielzahl von Kurzstreckenfunknetzwerken Informationen zu empfangen, die jeweils kennzeichnende Identifikationen von den mobilen Endgeräten in den jeweiligen Kurzstreckenfunknetzwerken und Positionsdaten umfassen. Somit kann der Server 40 diese verschiedenen Kurzstreckenfunknetzwerke jeweils in mindestens eine Gruppe räumlich benachbarter mobiler Endgeräte einteilen und jeder Gruppe eine Positionsinformation zuweisen.

Die bezüglich der Figur 1 und den Figuren 2a und 2b genannten Erläuterungen und Vorteile gelten gleichermaßen für die folgenden weiteren beispielhaften Ausführungsformen der vorliegenden Erfindung.

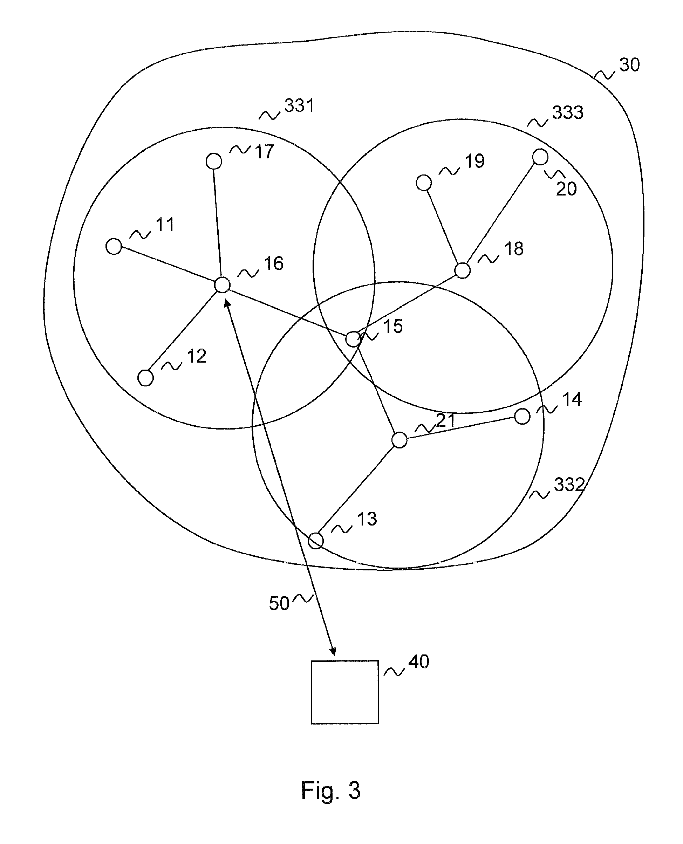

Figur 3 zeigt eine exemplarische Gruppierung eines Kurzstreckenfunknetzwerks 330 zwischen verschiedenen mobilen Endgeräten 11-21 gemäß einer weiteren beispielhaften Ausführungsform.

Dieses Kurzstreckenfunknetzwerk 330 basiert auf dem in Fig. 1 dargestelltem Kurzstreckenfunknetzwerk 30, wobei das Kurzstreckennetzwerk 330 in drei Unternetzwerke 331, 332 und 333 aufgeteilt ist. Diese Unternetzwerke 331, 332 und 333 können beispielsweise Piconetzwerke des als Ad-hoc-Netzwerk ausgebildeten Kurzstreckenfunknetzwerks 330 darstellen, wobei das mobile Endgerät 16 als Master für das erste Piconetzwerk 311, das mobile Endgerät 21 als Master für das zweite Piconetzwerk 312 und das mobile Endgerät 18 als Master für das dritte Piconetzwerk 313 fungiert.

Wie zuvor in Bezug auf das in Figur gezeigte Ausführungsbeispiel beschrieben sei wiederum angenommen, dass das mobile Endgerät 16 das Kurzstreckenfunknetzwerk 330 nach den kennzeichnenden Identifikationen der weiteren mobilen Endgeräte 11-15 und 17-21 abscannt und hierbei auch eventuelle Positionsdaten von diesen weiteren mobilen Endgeräten 11-15 und 17-21 empfängt.

Das mobile Endgerät 16 empfängt hierbei ferner zusätzliche positionsbezogene Informationen über die jeweiligen mobilen Endgeräte in Bezug auf das Kurzstreckenfunknetzwerk 330, welche vom Server 40 zur Einteilung der Gruppen verwendet werden können, wie es auch optional im ersten Ausführungsbeispiel erläutert wurde.

Der Client auf dem mobilen Endgerät 16 überträgt diese kennzeichnenden Informationen, die Positionsdaten und die zusätzlichen positionsbezogenen Informationen zum Server 40.

Der Server 40 kann nun auf Grundlage der zusätzlichen Informationen, welche Netzwerkinformationen darstellen, eine Vorgruppierung der mobilen Endgeräte vornehmen, wobei beispielsweise die mobilen Endgeräte 11, 12, 16 und 17 eine erste Gruppe bilden können, die mobilen Endgeräte 13, 14, 15 und 21 eine zweite Gruppe bilden können, und die mobilen Endgeräte 18-20 eine dritte Gruppe bilden können. Bei mobilen Endgeräten, die zu mehreren Unternetzwerken zugeordnet werden können, wie dem mobilen Endgerät 15, kann der Server 40 beispielsweise zunächst eine zufällige oder anderweitige Zuordnung dieses mobilen Endgeräts zu einer Gruppe vornehmen. Der Server 40 kann dann beispielsweise noch weitere Änderungen an dieser Vorgruppierung vornehmen, beispielsweise auf Grundlage der Positionsdaten und/oder den zusätzlichen Informationen. So kann z.B. das mobile Endgerät 15, welches jedem der drei Piconetzwerke 331, 332 und 333 zugeordnet werden kann, auch noch zu einer anderen Gruppe verschoben werden, beispielsweise in Abhängigkeit von weiteren zusätzlichen positionsbezogenen Informationen.

Auf Grundlage der empfangenen Positionsdaten kann nun der Server 40 jeder der drei Gruppen 331, 332, 333 eine Positionsinformation zuweisen. Hierzu gelten gleichermaßen die zum ersten Ausführungsbeispiel genannten Erläuterungen. Liegen dem Server 40 für eine der Gruppen keine Positionsdaten vor, so kann der Server 40 beispielsweise die Positionsdaten von benachbarten Gruppen für eine Schätzung der Position dieser Gruppe verwenden.

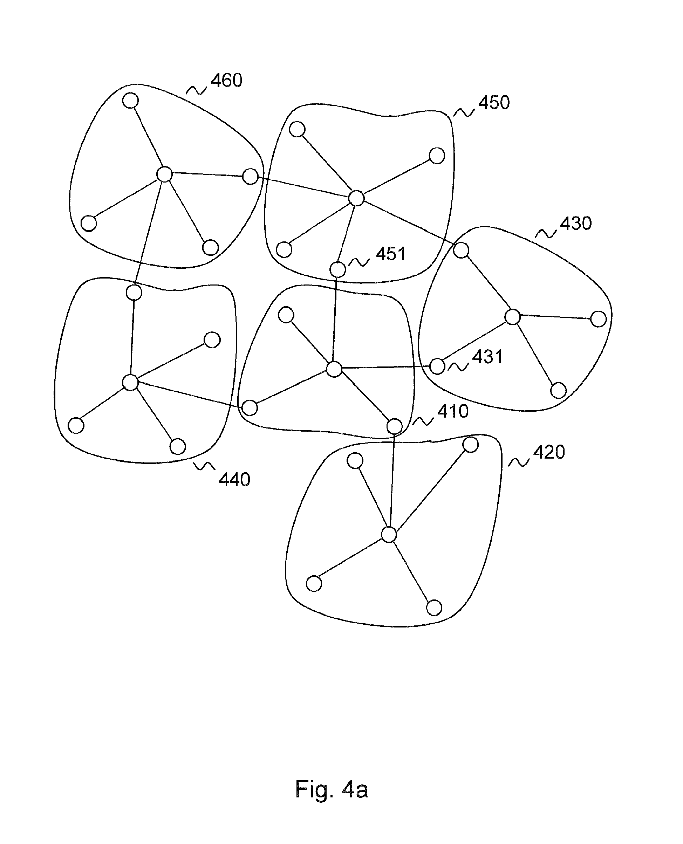

Eine solche beispielhafte Variante der sei für das in Figur 4a exemplarisch gruppierte Kurzstreckenfunknetzwerk angenommen. Es sei beispielhaft angenommen, dass der Server 40 das in Fig. 4a dargestellte Funknetzwerk in die Gruppen 410, 420, 430, 44, 450 und 460 eingeteilt hat, wobei diese Einteilung gemäß den zuvor beschriebenen Erläuterungen erfolgt sein kann.

Ferner sei angenommen, dass für keines des der Gruppe 410 zugeordneten mobilen Endgeräte Positionsdaten vorliegen, wohingegen der Server 40 beispielsweise für die benachbarten Gruppen 420, 430, 450 und 470 Positionsdaten vorliegen hat.

Der Server 40 kann nun beispielsweise auf Grundlage der Positionsdaten der der Gruppe 410 benachbarten Gruppen 420, 430, 440 und 450 die Position der Gruppe 410 schätzen. Diese Schätzung kann beispielsweise aus einer Mittelung der zuvor bestimmten Positionsinformationen dieser benachbarten Gruppen 420, 430, 450 und 470 erfolgen.

Es können jedoch noch weitere Informationen zur Schätzung der Positionsinformation der Gruppe 410 mit verwendet werden. Beispielsweise können zur Schätzung der Positionsinformation der Gruppe 410 Positionsdaten von mobilen Endgeräten benachbarter Gruppen verwendet werden, wenn diese mobilen Endgeräte direkt mit einem mobilen Endgerät der Gruppe 410 verbunden sind. Sei bezüglich der Fig. 4a beispielsweise angenommen, dass die mobilen Endgeräte 431 und 451, welche jeweils direkt mit einem mobilen Endgerät der Gruppe 410 verbunden ist, eigene Positionsdaten vorliegen haben, so können beispielsweise diese Positionsdaten anstatt der Positionsinformation der Gruppen 430 und 450 für die Schätzung der Positionsinformation der Gruppe 410 verwendet werden, da durch die direkte Verbindung der mobilen Endgeräte 431 und 451 zur Gruppe 410 angenommen werden kann, dass diese mobilen Endgeräte 431 und 451 der Gruppe 410 räumlich relative nahe zugeordnet sind.

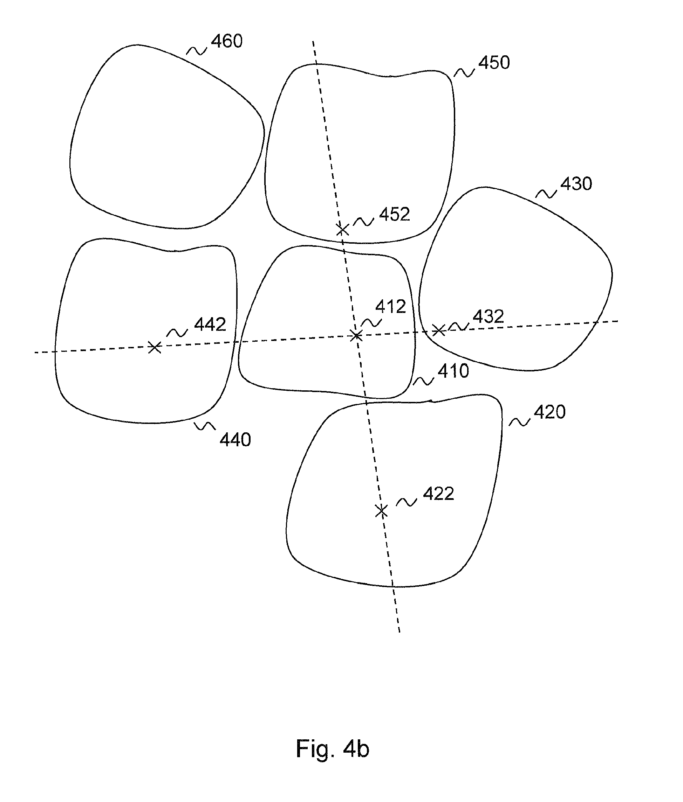

In Fig. 4b ist beispielhaft solch eine Ermittlung einer Positionsinformation 412 für die Gruppe 410 dargestellt, die auf den Positionsinformationen 422 und 442 der benachbarten Gruppen 420 und 440 und auf den Positionsdaten 432 und 452 der mobilen Endgeräte 431 bzw. 451 beruht. Die Mittelung aus den Positionsinformationen 422, 442 und den Positionsdaten 432 und 452 kann somit einer Kreuzpeilung zwischen diesen Positionsinformationen bzw. Positionsdaten entsprechen.

Fig. 5a zeigt ein exemplarisches Flußdiagramm eines Verfahrens gemäß einer weiteren beispielhaften Ausführungsform der vorliegenden Erfindung zur Steuerung eines Servers, wie z.B. des zuvor beschriebenen Servers 40.

Fig. 5b zeigt ein exemplarisches Flußdiagramm eines Verfahrens gemäß einer weiteren beispielhaften Ausführungsform der vorliegenden Erfindung zur Steuerung eines mobilen Endgeräts.

Es sei angenommen, dass der Server 40 zuvor verschiedene Gruppen ermittelt hat und diesen Gruppen Positionsinformationen zugewiesen hat, wie beispielsweise bezüglich der vorhergehenden Ausführungsbeispiele beschrieben wurde.

Diese Einteilung von mobilen Endgeräten in verschiedene Gruppen kann dazu verwendet werden, gezielte gruppenspezifische Daten an eine Gruppe zur Ausführung dieser Daten auf mobilen Endgeräten der ausgewählten Gruppe zu senden.

Hierzu wählt der Server 40 zunächst eine Gruppe aus den verschiedenen Gruppen aus. Dieser Auswahlvorgang wird in Fig. 5a durch den Block 510 dargestellt. Anschließend sendet der Server 40 beispielsweise gruppenspezifische Daten an eines der mobilen Endgeräte in dieser ausgewählten Gruppe über das weitere Funknetzwerk, was in Fig. 5b durch den Block 520 dargestellt wird.

Mit Bezug auf die in Fig. 3 dargestellte Gruppierung könnte der Server 40 beispielsweise das Unternetzwerk 333 als Gruppe 333 auswählen, wobei beispielhaft angenommen sei, dass das mobile Endgerät 15 dieser Gruppe 333 zugeordnet sei, und die gruppenspezifischen Daten an das mobile Endgerät 18 senden. Gleichzeitig kann der Server 40 Anweisungsdaten an das mobile Endgerät 18 senden, wobei diese Anweisungsdaten weitere mobiles Endgeräte 15, 19 und 20 aus der ausgewählten Gruppe benennen, an die die gruppenspezifischen Daten über das Kurzstreckenfunknetzwerk zu verteilen sind.

Auf dem mobilen Endgerät 18 kann beispielsweise ein Client installiert sein, der dazu eingerichtet ist, vom Server 40 gruppenspezifische Daten und die vorstehend genannten Anweisungsdaten zu empfangen. Dieses Empfangen ist in Fig. 5b durch Block 550 dargestellt. Auf Grundlage der empfangenen gruppenspezifischen Daten kann nun das mobile Endgerät 18 die gruppenspezifischen Daten an die in den Anweisungsdaten benannten weiteren mobilen Endgeräte 15, 19 und 20 über das Kurzstreckenfunknetzwerk 30 versenden.

Die gruppenspezifischen Daten können beispielsweise Verhaltensanweisungen umfassen, welche dann von den jeweiligen mobilen Endgeräten der ausgewählten Gruppe, in diesem Beispiel die mobilen Endgeräte 15, 18, 19 und 20, ausgeführt werden können.

Alternativ kann der Server 40 in Schritt 410 auch die gruppenspezifischen Daten jeweils einzeln an jedes der in der ausgewählten Gruppe 333 enthaltenen mobilen Endgeräte 15, 18, 19 und 20 über das weitere Funknetzwerk senden, oder auch an ausgewählte mobile Endgeräte 15, 18, 19 und 20 dieser Gruppe 333.

So können beispielsweise bei Verkehrsstaus gezielt Anweisungen an mobile Endgeräte von ausgewählten Gruppen gesendet werden, um beispielsweise Rettungsgassen zu bilden oder ideale Geschwindigkeiten einzuhalten, die energieeffizient sind oder zu einer schnelleren Auflösung eines Staus führen. Bei Großveranstaltungen können beispielsweise Publikumsströme besser geleitet werden. In Stadien und bei Konzerten können beispielsweise durch gezielt getimte Aufsteh- und Armbewegungen vielfältige Wellen erzeugt oder durch koordinierte Displayanimationen Lichteffekte erzeugt werden.

Sämtliche zuvor erläuterten beispielhaften Ausführungsformen sind miteinander kombinierbar.

## Patentansprüche

1. Verfahren zur Steuerung eines mobiles Endgeräts (11-21, 431, 451) durch:
- Empfangen mindestens einer kennzeichnenden Identifikation mindestens eines weiteren mobilen Endgeräts (11-21, 431, 451) über einen Kurzstreckenfunk;
- Senden von Positionsdaten und die mindestens eine kennzeichnende Identifikation umfassenden Informationen an einen Server (40).

2. Verfahren nach Anspruch 1, **dadurch gekennzeichnet, dass** die Positionsdaten mindestens eine der folgenden Positionsdaten umfassen:
- Positionsdaten von mindestens einem des mindestens einen weiteren mobilen Endgeräts (11-21, 431, 451), welche über den Kurzstreckenfunk empfangen werden; und
- eigene Positionsdaten des mobilen Endgeräts (11-21, 431, 451).

3. Verfahren nach einem der vorangehenden Ansprüche, **dadurch gekennzeichnet, dass** das Verfahren das Einschalten des Kurzstreckenfunks und das Suchen nach weiteren mobilen Endgeräten unter Verwendung des Kurzstreckfunks umfasst, so dass zwischen dem mobilen Endgerät (11-21, 431, 451) und dem mindestens einen weiteren mobilen Endgerät (11-21, 431, 451) ein selbst organisiertes Kurzfunknetzwerk (30, 330) etabliert wird, über das die mindestens eine kennzeichnende Identifikation empfangen wird.

4. Verfahren nach einem der vorangegangenen Ansprüche,
**dadurch gekennzeichnet, dass** das mobile Endgerät über den Kurzstreckenfunk zusätzliche positionsbezogene Informationen über mindestens eines der weiteren mobilen Endgeräte in Bezug auf ein vom Kurzstreckfunk ausgebildetes Kurzstreckenfunknetzwerk (30, 330) empfängt, und dass die gesendeten Informationen diese zusätzlichen positionsbezogenen Informationen umfassen.

5. Verfahren nach Anspruch 4, **dadurch gekennzeichnet, dass** die zusätzlichen positionsbezogenen Informationen mindestens eine der folgenden Informationen umfassen:
- Information, ob das jeweilige mobile Endgerät (11-21, 431, 451) ein Master oder Slave-Gerät ist;
- Information, mit welchen weiteren mobilen Endgeräten (11-21, 431, 451) das jeweilige mobile Endgerät (11-21, 431, 451) direkt über das Kurzstreckenfunknetzwerk (30, 330) verbunden ist;
- Information, zu welchem Unternetzwerk (331, 332, 333) des Kurzstreckenfunknetzes (330) das jeweilige mobile Endgerät (11-21) zugeordnet ist, wobei das Kurzstreckenfunknetzwerk (330) mindestens ein Unternetzwerk (331, 332, 333) umfasst; und
- Information über ein Maß der Empfangsfeldsstärke der Kurzstreckenfunkverbindung, mit der das jeweilige mobile Endgerät (11-21, 431, 451) mit einem weiteren mobilen Endgerät (11-21, 431, 451) über das Kurzstreckenfunknetzwerk (30, 330) verbunden ist.

6. Verfahren zur Steuerung eines mobiles Endgeräts (11-21) durch:
- Empfangen von gruppenspezifischen Daten und von Anweisungsdaten von einem Server (40); wobei die Anweisungsdaten eine Liste mit mindestens einem weiteren mobilen Endgerät umfasst (11-21, 431, 451), und
- Senden der gruppenspezifischen Daten an das mindestens eine weitere mobiles Endgerät (11-21, 431, 451) über ein Kurzstreckenfunknetzwerk (30, 330).

7. Verfahren zur Steuerung eines Servers (40) durch:
- Empfangen von Informationen von einem mobilen Endgerät (16), wobei diese Information mindestens eine kennzeichnende Identifikation von mindestens einem weiteren mobilen Endgerät (11-15, 17-21, 431, 451) und Positionsdaten umfassen, wobei das mobile Endgerät (16) und das mindestens eine weitere mobile Endgerät (11-15, 17-21, 431, 451) über einen Kurzstreckenfunk verbunden sind;
- Ermitteln von mindestens einer Gruppe (410, 420, 430, 440, 450, 460) an benachbarten mobilen Endgeräten (11-21, 431, 451) auf Grundlage der empfangenen Informationen;
- Ermitteln und Zuweisen einer Positionsinformation zu jeder der mindestens einen ermittelten Gruppe (410, 420, 430, 450, 460).

8. Verfahren nach Anspruch 7, **dadurch gekennzeichnet, dass** das Ermitteln einer Positionsinformation zu einer ermittelten Gruppe (410, 420, 430, 440, 450, 460) auf Grundlage von mindestens einer der folgenden Positionsdaten erfolgt:
- Positionsdaten mindestens eines mobilen Endgeräts dieser Gruppe(420, 430, 440, 450, 460); und
- Positionsdaten von mindestens einem mobilen Endgerät mindestens einer benachbarten Gruppe (420, 430, 440, 450).

9. Verfahren nach einem der Ansprüche 7-8, **dadurch gekennzeichnet, dass** die empfangenen Informationen zusätzliche positionsbezogene Informationen über mindestens eines der mobilen Endgeräte (11-21, 431, 451) in Bezug auf ein vom dem Kurzstreckenfunk ausgebildetes Kurzstreckenfunknetzwerk (30, 330) umfassen.

10. Verfahren nach Anspruch 9, **dadurch gekennzeichnet, dass** die zusätzlichen positionsbezogene Informationen mindestens eine der folgenden Informationen darstellen:
- Information, ob das jeweilige mobile Endgerät (11-21, 431, 451) ein Master oder Slave-Gerät ist;
- Information, mit welchen weiteren mobilen Endgeräten (11-21, 431, 451) das jeweilige mobile Endgerät (11-21, 431, 451) direkt über das Kurzstreckenfunknetzwerk (30, 330) verbunden ist; und
- Information über ein Maß der Empfangsfeldsstärke der Kurzstreckenfunkverbindung, mit der das jeweilige mobile Endgerät (11-21, 431, 451) mit einem weiteren mobilen Endgerät (11-21, 431, 451) über das Kurzstreckenfunknetzwerk verbunden ist.

11. Verfahren nach einem der Ansprüche 7-10, **dadurch gekennzeichnet, dass** der Server (40) eine Gruppe (410, 420, 430, 440, 450, 460) der mindestens einen Gruppe (410, 420, 430, 440, 450, 460) auswählt und an diese ausgewählte Gruppe (410, 420, 430, 440, 450, 460) gruppenspezifische Daten sendet.

12. Verfahren nach Anspruch 11, **dadurch gekennzeichnet, dass** der Server die gruppenspezifischen Daten an ein mobiles Endgerät (11-21, 431, 451) der ausgewählten Gruppe (410, 420, 430, 440, 450, 460) sendet und dieses mobile Endgerät (11-21, 431, 451) anweist, die gruppenspezifischen Daten an die weiteren mobilen Endgeräte (11-21, 431, 451) dieser ausgewählten Gruppe (410, 420, 430, 440, 450) über das Kurzstreckenfunknetzwerk (30, 330) zu senden.

13. Mobiles Endgerät (11-21, 431, 451) mit:
- einem ersten Kommunikationsmodul, welches dazu eingerichtet ist, über ein Kurzstreckenfunknetzwerk zu kommunizieren; und
- einem Prozessor, welcher dazu eingerichtet ist, das Verfahren zum Steuern eines mobilen Endgeräts (11-21, 431, 451) nach einem der Ansprüche 1-6 auf dem mobilen Endgerät (11-21, 431, 451) durchzuführen.

14. Server (40) mit einem Prozessor, wobei der Prozessor dazu eingerichtet ist, das Verfahren zum Steuern eines Servers (40) nach einem der Ansprüche 11-24 auf dem Server (40) durchzuführen.

15. System mit mindestens einem mobilen Endgerät (11-21, 431, 451) nach Anspruch 13 und einem Server (40) nach Anspruch 14.

16. Computerprogramm zur Steuerung eines mobilen Endgeräts (11-21, 431, 451) durch:
- Empfangen mindestens einer kennzeichnenden Identifikation mindestens eines weiteren mobilen Endgeräts (11-21, 431, 451) über einen Kurzstreckenfunk; und
- Senden von Positionsdaten und die mindestens eine kennzeichnende Identifikation umfassenden Informationen an einen Server (40).

17. Computerprogramm zur Steuerung eines Servers (40) durch:
- Empfangen von Informationen von einem mobilen Endgerät (11-21, 431, 451), wobei diese Information mindestens eine kennzeichnende Identifikation von mindestens einem weiteren mobilen Endgerät (11-21, 431, 451) und Positionsdaten umfassen, wobei das mobile Endgerät (11-21, 431, 451) und das mindestens eine weitere mobile Endgerät (11-21, 431, 451) über ein Kurzstreckenfunknetzwerk verbunden sind;
- Ermitteln von mindestens einer Gruppe (410, 420, 430, 440, 450, 460) an benachbarten mobilen Endgeräten (11-21, 431, 451) auf Grundlage der empfangenen Informationen; und
- Ermitteln und Zuweisen einer Positionsinformation zu jeder der mindestens einen ermittelten Gruppe (410, 420, 430, 440, 450, 460).
